Europäisches Patentamt

European Patent Office

Office européen des brevets

(19)

(11) Publication number: **0 046 646**
A2

# EUROPEAN PATENT APPLICATION

(21) Application number: 81303635.7

(22) Date of filing: 10.08.81

(51) Int. Cl.³: **F 16 C 19/16**
**B 60 B 35/18**

(30) Priority: 21.08.80 GB 8027205

(43) Date of publication of application:
03.03.82 Bulletin 82/9

(84) Designated Contracting States:
AT BE DE FR GB IT LU NL SE

(71) Applicant: GKN Transmissions Limited
P.O. Box 405 Chester Road
Erdington, Birmingham B24 0RB(GB)

(72) Inventor: Palmer, Bertram Joseph
26 Captains Lane Barton Under Needwood
Staffordshire DE13 8EZ(GB)

(74) Representative: Dodd, Graham Marshall et al,
Guest Keen & Nettlefolds Ltd. Group Patents and
Licensing Department Group Head Office P.O. Box 55
Smethwick Warley West Midlands B66 2RZ(GB)

(54) Wheel bearing assemblies.

(57) A motor vehicle wheel bearing assembly with inner and outer bearing members and a single row of rolling bearing elements therebetween. One of the bearing members is formed of two components secured together, e.g. by welding, and the inner bearing member includes an integral universal joint member. The bearing elements may be balls or taper rollers, engaging in gothic arch or vee section grooves respectively.

FIG.1

Croydon Printing Company Ltd.

0046646

80.056/GMD          Wheel Bearing Assemblies

This invention relates to a wheel bearing assembly for a drivable wheel of a motor vehicle.

It has been proposed hitherto that a motor vehicle wheel bearing assembly can be simplified and lightened by arranging components thereof to perform more than a single mechanical function. Thus, an outer race or races of the bearing can be formed integrally with a flange or the like to enable them to be bolted directly to vehicle suspension components without the use of intermediate components. The outer member of a constant velocity universal joint through which the wheel is drivable can itself form part of the inner race of the bearing. Examples of such constructions are disclosed in, for example British Patent Specifications 1,347,996 and 1,416,989.

It is an object of the present invention to provide a wheel bearing assembly which improves further upon these known assemblies.

According to the invention, we provide an assembly comprising an outer bearing member, an inner bearing member, a single row of rolling bearing elements disposed therebetween for rotatably mounting the inner bearing member relative to the outer bearing member, said elements engaging respective bearing surfaces provided on said inner and outer bearing members for taking loads both radially and in each direction axially therebetween, one of said bearing members comprising two components each of which defines a part of said bearing surface thereof and said inner bearing member including an integrally formed main member of a constant velocity ratio universal joint.

By a main member of a universal joint, we mean one of the members to and from which torque is applied and taken respectively, and which have torque transmitted between them through an intermediate component or components to accommodate universal angular movement.

By incorporating a single row of rolling bearing element, an extremely compact assembly is obtained. The formation of one of the bearing members as two components gives the result that the initial clearance or preload in the bearing can be set during assembly so as to obtain a long service life.

The rolling bearing elements may be balls, in which case the bearing surfaces in the inner and outer bearing members may be grooves of 'gothic arch' cross-sectional shape, or symmetrical vee shape. Alternatively, the rolling bearing elements could comprise tapered rollers arranged alternately to take axial forces in opposite directions, and the bearing surfaces would comprise grooves of vee shape, in cross-section, with opposed flat sides.

The invention also provides a method of manufacturing the assembly set forth above.

These and other features of the invention will now be described by way of example with reference to the accompanying drawings, of which

FIGURE 1 is a section through part of one embodiment of assembly according to the invention.

FIGURE 2 is a section through part of a further embodiment of the invention.

FIGURE 3 is a diagram illustrating the geometry of the embodiment of Figure 2.

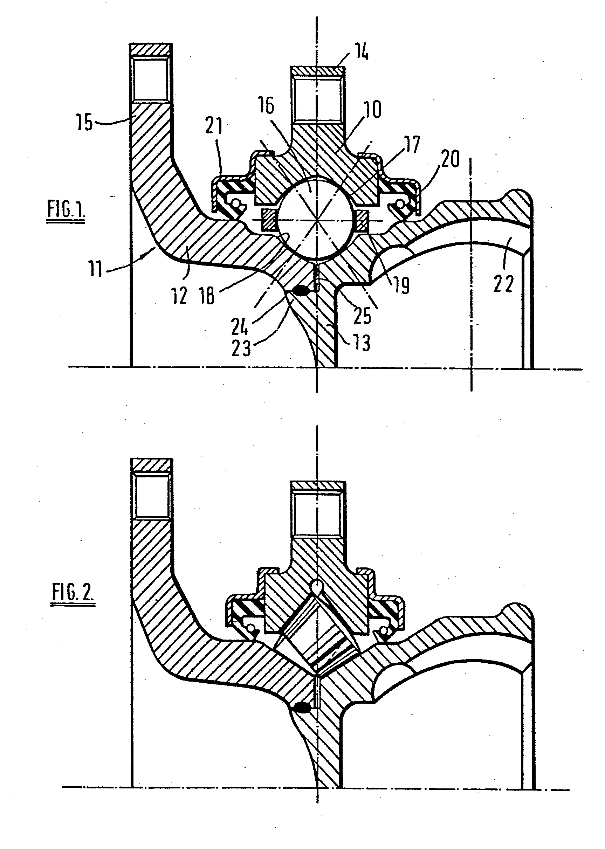

Referring firstly to Figure 1, the assembly there illustrated comprises an outer bearing member 10 and an inner bearing member 11 which comprises two components 12, 13. The outer bearing member 10 has an integral flange 14 which is provided with apertures to enable it to be attached to appropriate suspension components of a motor vehicle, and the inner bearing component 12 has a flange 15 to which may be secured a wheel, and/or a brake drum or disc as may be appropriate.

The inner and outer bearing members are mounted together for relative rotation by a number of balls 16 disposed between them. The balls 16 run in grooves 17, 18 in the outer and inner bearing members, respectively, which grooves are of 'gothic arch' cross-sectional shape so that each ball has two contact points with each groove. The points of contact of each ball with the grooves in the inner and outer member are opposite one another, so that the bearing can resist radial forces and axial forces in opposite directions.

The balls are angularly spaced from one another and located by a cage 19. Seals 20, 21 secured to the outer bearing member 10 and running against the inner components 13, 12 are provided for maintaining lubricant in the bearing and keeping dirt out.

The component 13 constitutes the outer member of a constant velocity ratio universal joint, of the type in which torque is transmitted between inner and outer members by balls engaging grooves in the members. Thus the component 13 is provided internally with longitudinally extending grooves one of which is shown at 22. The component 13 has a spigot 23 which fits closely within the end of the component 12. The components are held together by a weld 24 at these interfitting parts, and it will be noted that there may be a gap 25 between these components at the base of groove 18.

In manufacture of the assembly, the two components 12, 13 would be placed together with the radially extending surfaces, which as illustrated define the gap 25, abutting one another while the shape of the groove 18 is ground. The groove in the outer bearing member 10 would be ground in the normal way for such a component. The cage, balls, and seals would be fitted to the outer bearing member and loaded with a pre-determined amount of grease, after which the two components of the inner bearing member are brought together and loaded axially towards one another while welding is effected at the spigot 23 to lock the assembly together.

This construction of the inner bearing member enables tolerances to be taken up so that there is no undesirable play in the bearing assembly.

In order to obtain the correct load in the bearing assembly, the welding of the two components of the inner member together could be effected while applying a force to these components and measuring the torque required to rotate the outer bearing member. Electron beam welding could be used as the welding process.

Referring now to Figure 2, there is illustrated an alternative embodiment in which the rolling elements are taper rollers instead of balls. Hence the grooves in the inner and outer bearing members have flat sides in cross-section. The rollers are arranged alternately facing in opposite directions, so that the bearing will take axial loads in each direction, and in this embodiment the rollers may be crowded in the bearing (i.e. there is no cage).

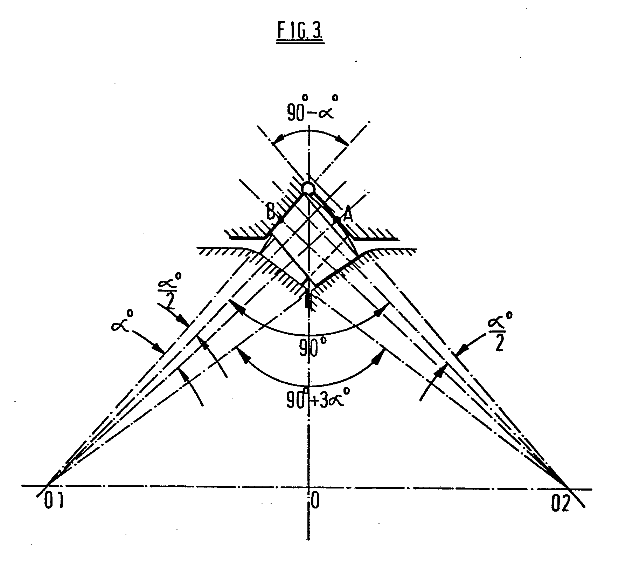

The geometrical relationships between the various parts of the bearing of Figure 2 are shown in Figure 3, in which the rotational axes of the rollers facing in opposite directions are shown as $O_1A$ and $O_2B$. The rotational axis of the bearing assembly as a whole is the line $O_1 O_2$, and the shapes of the grooves in the inner and outer bearing members are determined by the nominal diameter of each roller and the nominal pitch circle diameter thereof, defined by the intersection of two lines at right angles to one another, spaced outside the roller axes $O_1A$ and $O_2B$ by an angle substantially $\frac{1}{2}\propto$ and passing through the centres $O_1$ and $O_2$, where $\propto$ is half the angle subtended by the frusto-conical sides of the roller. Thus the sides of the groove in the outer bearing member have an included angle of $90^0 - \propto$, and those of the inner bearing member $90^0 + 3 \propto$. The larger diameter end of each roller is spherically partly or wholly domed with a radius equal to $O_1A$ or $O_2B$.

The method of manufacture and assembly of this embodiment of bearing would be the same as that described above in relation to the embodiment of Figure 1. This ensures that the rollers have their domed end faces in contact with the surfaces of the groove in the outer bearing member.

In the embodiments above described, the diameter of the bearing is smaller than that of the constant velocity joint outer member, or the flange which provides for wheel attachment. If, however, the minimum diameter of the outer bearing member is larger than the outside diameter of the constant velocity joint member, then the outer bearing member could be of two part construction instead of the inner bearing member. The method of manufacture and assembly would be in principle similar to that described above.

CLAIMS

1.    A wheel bearing assembly for a motor vehicle, comprising an outer bearing member (10), an inner bearing member (11), rolling bearing elements (16) disposed therebetween for rotatably mounting the inner bearing member (11) relative to the outer bearing member (10), said elements (16) engaging respective bearing surfaces (17, 18) provided on said inner and outer bearing members (10, 11) for taking loads both radially and in each direction axially therebetween, characterised in that there is a single row of said bearing elements (16), one of said bearing members comprising two components (12, 13) each of which defines a part of said bearing surface thereof, and said inner bearing member (11) including an integrally formed main member (13) of a constant velocity ratio universal joint.

2.    An assembly according to Claim 1 further characterised in that said inner bearing member (11) comprises said two components (12, 13), one of which components (13) also constitutes said main member of a constant velocity ratio universal joint.

3.    An assembly according to Claim 1 or Claim 2 further characterised in that said rolling bearing elements (16) comprise balls.

4.    An assembly according to Claim 3 further characterised in that said bearing surfaces (17, 18) are grooves of gothic arch cross-sectional shape.

5.    An assembly according to Claim 1 or Claim 2 further characterised in that said rolling bearing elements (16) comprised tapered rollers arranged alternately to face in opposite directions axially of the assembly, and said bearing surfaces (17, 18) comprise grooves with flat sides in cross-section.

6. An assembly according to any one of the preceding claims further characterised in that said outer bearing member (10) includes an integrally formed flange (14) for attachment to a suspension component or components of a vehicle, and the inner bearing member an integral flange (15) for wheel attachment.

7. An assembly according to any one of the preceding claims further characterised in that said two components (12, 13) are welded together, such welding having been performed while said components are loaded relative to one another to eliminate slackness in the bearing assembly.

8. A method of manufacturing an assembly according to any one of the preceding claims, comprising providing an outer (10) and an inner bearing member (11), one of which comprises two components (12, 13) each of which components forms part of a bearing surface, said inner bearing member (11) including an integrally formed main member (13) of a constant velocity ratio universal joint; placing said bearing members (10, 11) in assembled relationship with a single row of rolling bearing elements (16) therebetween, setting said two components (12, 13) relative to one another so as to provide a required clearance or preload in the bearing, and securing said components (12, 13) together.

9. A method according to Claim 8, further characterised by measuring the torque required to effect relative rotation between said inner and outer bearing members (10, 11) during setting of said components, to provide an indication of correct clearance or preload in the bearing.

1 | 2

FIG. 1.

FIG. 2.

FIG. 3